# FASCICULE DE BREVET EUROPEEN

(11) **EP 0 631 470 B1**
(45) Date de publication et mention de la délivrance du brevet: **24.09.1997**
(21) Numéro de dépôt: 93920571.2
(22) Date de dépôt: 15.03.1993
(51) Int. Cl.: A01K 73/045

(54) **PANNEAUX DE CHALUT**
SCHERBRETT
TRAWL BOARDS

(30) Priorité: 17.03.1992 FR 9203334
(43) Date de publication de la demande: 04.01.1995
(73) Titulaire: FORGES LE BEON (SA), F-56100 Lorient (FR)
(72) Inventeur: LE BEON, Roger, F-56150 Baud (FR)
(74) Mandataire: Fournier, Michel Robert Marie
(86) Numéro de dépôt international: FR9300255
(87) Numéro de publication internationale: WO9318647

(56) Documents cités:
- DE-C- 510 144
- FR-A- 2 429 560
- GB-A- 788 237
- GB-A- 801 878
- GB-A- 855 746
- GB-A- 1 128 844
- NL-A- 77 466
- US-A- 3 401 477

## Description

La présente invention concerne des panneaux de chalut dont la fonction première est de former divergent pour assurer l'écartement des ailes du chalut.

Les panneaux connus sont généralement constitués par un plan rectangulaire ou ovale, formés de plaques de bois ou d'acier et comportant une semelle destinée à les protéger contre l'usure due au frottement sur le fond de la mer.

Ces panneaux comportent, sur une face, des pattes ou un élément en saillie pour l'amarrage du câble de traction, et sur l'autre face au côté opposé, des pattes pour la fixation du câble allant à l'aile du chalut de manière qu'au travail, les deux panneaux, chacun sur un côté du chalut, tendent à s'écarter l'un de l'autre pour maintenir celui-ci ouvert.

Au travail, du fait qu'ils frottent sur le fond, les panneaux restent difficilement verticaux et ont tendance à basculer soit vers l'avant, soit vers l'arrière, ce qui provoque des modifications constantes de l'ouverture du chalut.

Ils travaillent avec des angles d'attaque de 30 à 42°, d'où une résistance considérable à l'avancement due à la dépression qui se produit à l'arrière et aux turbulences importantes qui en résultent. Du fait qu'ils traînent sur le fond, cette résistance hydrodynamique à l'avancement est augmentée de celle engendrée par la semelle râclant un sol plus ou moins rocailleux ou vaseux. Les panneaux se comportent à la manière d'un soc de charrue et, comme ils sont construits très lourds pour maintenir le chalut sur le fond marin, l'on constate une rapide usure des semelles nécessitant de les remplacer fréquemment. Dans les fonds durs et rocailleux, les panneaux butent et se détériorent rapidement, ce qui occasionne de lourds frais d'entretien. De plus, le freinage énorme résultant de leur frottement sur le fond se traduit par des surconsommations de combustible loin d'être négligeables.

Parfois, l'un des panneaux reste croché sur une roche ou reste envasé dans un fond mou, provoquant l'arrêt du navire ancré subitement par l'arrière sur le panneau ; cet incident peut entraîner un très grave danger pour le navire, notamment par mauvais temps. Dans une telle situation, il n'est pas rare de voir couper les câbles et laisser tout le train de pêche au fond pour dégager le navire en position critique.

Par ailleurs, pour maintenir les panneaux dans une bonne position de travail, c'est-à-dire bien verticaux et avec un angle d'attaque déterminé, on les bride par l'arrière au moyen de câbles fixés à leur base et dans le haut. Ce réglage qui conditionne le bon fonctionnement des panneaux, et par voie de conséquence, l'ouverture correcte du chalut, est très délicat.

Pour le chalutage de fond, des problèmes apparaissent souvent lors de la mise à l'eau et du filage. En effet, les panneaux ont des difficultés à s'écarter tant qu'ils ne sont pas sur le fond. Avant que le chalut n'atteigne celui-ci, il arrive qu'il y ait emmêlement et que le démêlage requière beaucoup de temps. Et si un tel incident ne se produit pas, l'ouverture correcte du chalut ne peut se réaliser de toute façon qu'après stabilisation des panneaux sur le fond.

Le brevet US-A-3 401 477 au nom de Frank J. LUKETA, pui montre les caractéristiques du préambule de la revendication 1, divulgue un panneau divergent apportant une réponse partielle à ces différents problèmes : ce panneau comporte une ceinture périphérique en élastomère par laquelle il est en contact sur le fond marin ; d'autre part, un flotteur le long de son côté supérieur assure sa verticalité dans l'eau au départ du chalutage, tandis qu'un lest à sa base, déplaçable longitudinalement, permet le réglage d'assiette du panneau, afin qu'il porte uniformément tout au long de son côté inférieur. Cette possibilité de réglage permet de limiter l'usure de la portion de ceinture en élastomère glissant sur le fond, et du fait que le lest est écarté de la ceinture pour ne pas être lui aussi soumis à l'usure, l'équilibre du panneau ne subit pas de modification à l'usage.

Hormis cela, ce panneau reste un panneau de fond de conception classique, qui ne résout donc pas les problèmes de poids, de résistance à l'avancement, d'accrochage au fond, etc.

La présente invention a quant à elle pour but principal de pallier l'ensemble des inconvénients mentionnés ci-dessus.

Elle a également pour but de prévoir un panneau pouvant remplir d'autres fonctions en plus de l'ouverture du chalut.

Elle consiste en un nouveau panneau divergent pour assurer l'écartement des ailes d'un chalut, lequel panneau est de forme générale rectangulaire et à son côté supérieur pourvu d'un flotteur afin qu'en statique il se positionne verticalement dans l'eau, caractérisé en ce qu'il comporte sur l'avant de sa face intérieure un élément en saillie avec un câble de traction (D) qui constitue son unique liaison avec le train de pêche, en ce qu'il a une flottabilité nulle ou voisine de zéro, en ce qu'il définit dans la direction de son axe médian longitudinal, au moins le long d'une de ses faces, sur la longueur du flotteur, un passage d'eau pincé vers l'arrière, et en ce qu'il comporte des moyens permettant de régler l'inclinaison de son axe médian au repos dans l'eau.

En cours de travail, le panneau ne touche pas le fond marin, tout en accomplissant sa fonction d'écartement lorsqu'on l'utilise classiquement pour ouvrir transversalement le chalut. De préférence, on le choisit de flottabilité légèrement positive, de manière à ce que même à l'arrêt, il ne repose pas sur le fond. Si nécessaire, le côté opposé au flotteur comporte un lest, lequel peut être réglable en position longitudinale.

Une autre particularité du panneau selon l'invention est son unique point d'attache déporté par rapport à sa face intérieure pour sa fixation à un câble de traction. Le panneau s'équilibre de lui-même lorsqu'il y a mouvement en avant, et prend un angle d'attaque choisi de préférence entre 25 et 30°, environ. Cet angle peut être réglé en faisant varier longitudinalement la position du point d'attache au câble de traction, un jeu de plusieurs trous sur ledit élément en saillie étant prévu à cet effet. Aucune fixation n'est prévue sur la face arrière du panneau, contrairement à tous les panneaux existant actuellement.

Afin de réduire la résistance à l'avancement, le panneau présente avantageusement des ouvertures judicieusement disposées qui lui confèrent un régime currentiligne sans turbulences à l'arrière. D'autre part, et dans le même but, la partie avant du panneau peut comporter un élément transversal galbé.

Le flotteur le long de son côté supérieur est de préférence tubulaire. Le lest réglable sur le côté opposé détermine selon sa position l'inclinaison naturelle du panneau une fois immergé et tenu par le point de fixation du câble de traction. Le réglage se fait à l'arrêt en bassin, et est définitif pour une fonction donnée.

Ainsi réglé pour l'ouverture d'un chalut de fond, a l'avancement, le panneau garde sa position et se maintient au-dessus du fond de la mer, évitant ainsi l'usure et toutes les croches éventuelles. Pour maintenir le chalut au fond de la mer, le câble de traction du panneau est relié à une lourde chaîne ou à un lest quelconque.

Le panneau ne frottant plus sur le fond et s'équilibrant de lui-même dans une position préréglée, tous les inconvénients cités plus haut sont supprimés : plus d'usure de semelle ; plus de risque de croche ; économie de combustible ; stabilité parfaite ; écartement maximum dès le début du filage ; plus d'emmêlement ; entretien très réduit ; structure légère, soit environ trois fois moins lourde qu'un panneau classique de même puissance d'écartement.

Par déplacement du lest vers l'avant, et par l'adjonction d'un point de fixation du câble de traction plus bas, le panneau devient plongeur et écarteur. L'intérêt de ce réglage est qu'il peut s'appliquer au panneau de chalut pélagique travaillant entre deux eaux. Dans ce cas, on peut utiliser les deux systèmes : une paire de panneaux réglés normalement pour l'ouverture vers le haut, et une deuxième paire de panneaux réglés comme il vient d'être indiqué pour l'ouverture vers le bas.

Dans une autre application, le panneau réglé pour être plongeur est fixé, par l'intermédiaire d'un câble de traction, sur une fune à distance significative du chalut. Par la double inclinaison qu'il imprime à la fune, il permet de réduire la longueur de cette dernière pour la pêche dans des grands fonds.

L'invention sera mieux comprise à l'aide des explications qui vont suivre et des dessins annexés, dans lesquels :
la Fig. 1 montre schématiquement le principe du chalutage avec des panneaux classiques,
la Fig. 2 est une vue du nouveau principe de chalutage lié à l'utilisation des panneaux selon l'invention,
les Figs. 3, 4, 5 et 6 sont respectivement une vue en plan, une vue de dessus, une vue de bout de l'arrière et une vue de bout de l'avant d'une forme de réalisation préférée de ces panneaux,
la Fig. 7 est une vue schématique de dessus d'un train de pêche pourvu de panneaux selon l'invention,
la Fig. 8 est une vue de face du train de pêche de la Fig. 7,
la Fig. 9 est une vue schématique illustrant l'application des panneaux selon l'invention au chalut pélagique,
la Fig. 10 est une autre vue schématique illustrant l'utilisation des panneaux selon l'invention en tant que plongeurs montés sur les funes, et
les Figs. 11 à 14 sont des vues similaires aux Figs. 3 à 6, soit respectivement une vue en plan, une vue de dessus, une vue de bout de l'arrière et une vue de bout de l'avant d'une seconde forme de réalisation préférée de l'invention.

Dans l'ensemble des figures, les mêmes références désignent partout les mêmes éléments.

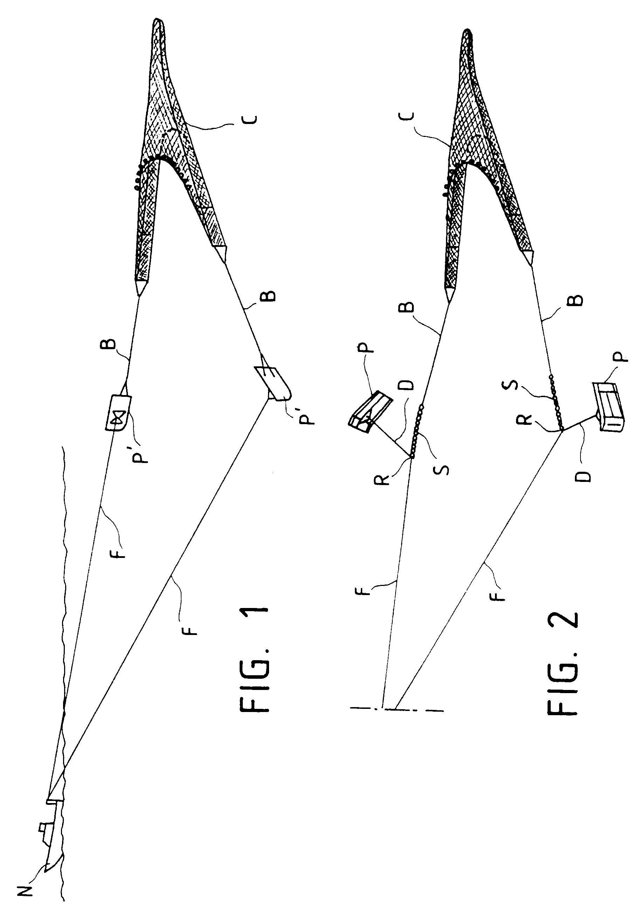

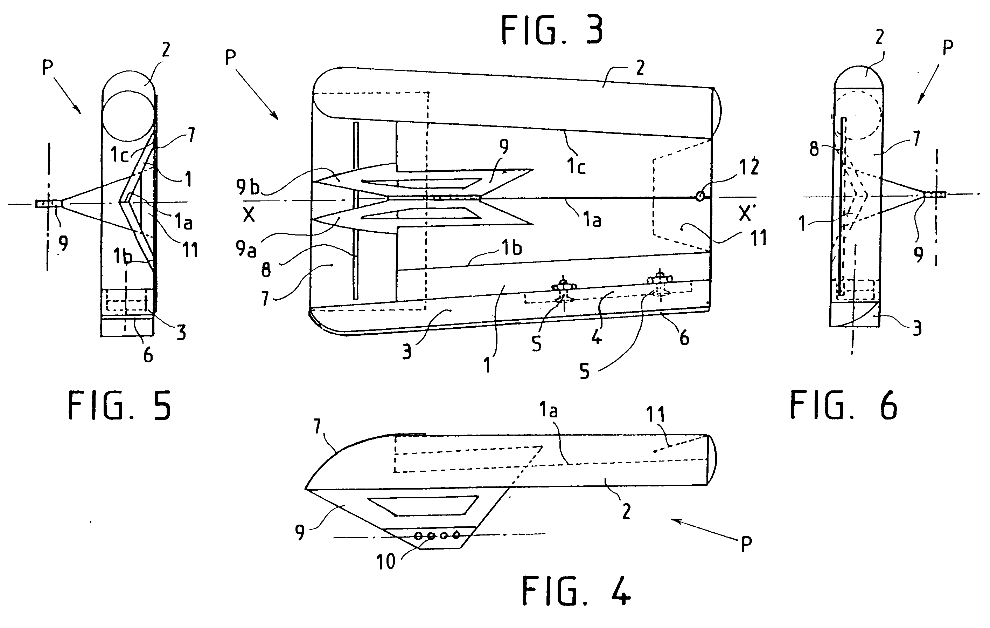

Le panneau P conforme à l'invention des Figs. 3 à 6 a une forme générale rectangulaire, ou plus précisément trapézoïdale d'axe médian longitudinal X-X', définissant un angle légèrement ouvert vers l'avant. Le corps du panneau P est constitué pour l'essentiel d'une plaque 1 symétrique par rapport à un plan passant par l'axe X-X'. Bien qu'elle puisse être plane, dans l'exemple de réalisation représenté, la plaque 1 comporte un pli médian la suivant X-X', un pli inférieur 1b parallèle à son côté inférieur et voisin de celui-ci, et un pli symétrique supérieur 1c. En coupe verticale, elle a donc un profil en V très évasé (angle au sommet de l'ordre de 150°), avec deux ailes prolongeant les branches du V. Considérant comme intérieur l'espace entre les deux panneaux P à la Fig. 2, le V est ouvert vers l'extérieur.

Sur la face intérieure de l'aile supérieure de la plaque 1, est fixé un flotteur tubulaire 2, et symétriquement sur la face intérieure de l'aile inférieure, un élément tubulaire 3 non étanche. Le flotteur 2 et l'élément 3 sont orientés parallèlement aux côtés de la plaque 1, en définissant donc entre eux un passage d'eau qui se rétrécit vers l'arrière. Lorsque le panneau avance dans l'eau, ce pincement assure sa stabilité longitudinale.

L'élément tubulaire 3, dont la section est de préférence carrée ou rectangulaire, est prévu pour loger un lest 4 fixé au moyen de boulons 5, et réglable en position longitudinale par déplacement des boulons dans des lumières ménagées à cet effet dans la paroi de l'élément 3. D'autre part, sur toute la longueur de ce dernier, une semelle 6 assure une protection en cas de contact imprévu avec le fond marin.

Comme on peut le voir à la Fig. 3, le flotteur 2 et l'élément tubulaire 3 se prolongent au-delà de l'avant de la plaque 1. En vue de dessus, à la Fig. 4, il apparaît que leur extrémité avant est découpée en arrondi vers l'extérieur, de manière à se terminer en pointe du côté intérieur. De cette pointe jusqu'en un lieu situé au-delà de l'avant de la plaque 1, une seconde plaque 7 épousant l'arrondi, et par conséquent galbée, réunit le flotteur 1 et l'élément tubulaire 3. Etant donné qu'elle est droite verticalement alors que la plaque 1 est en V, elle définit avec elle un passage d'eau triangulaire. De plus, la plaque 7 est ouverte verticalement par une fente 8 non loin de son bord avant, dont le rôle est de faciliter l'écoulement de l'eau sans turbulences. Les veines d'eau captées par la plaque 7 sur l'avant sont dirigées vers l'arrière du panneau en passant le long de la face extérieure de la plaque 1.

L'élément d'accrochage 9 du panneau P est en saillie sur les faces intérieures des plaques 1 et 7. Dans la forme de réalisation représentée, il est disposé selon le plan de symétrie longitudinal du panneau (passant par X-X'). Il consiste en deux plaques identiques 9a, 9b, sensiblement trapézoïdales, en forme de gousset, qui sont soudées aux plaques 1 et 7 chacune d'un côté de X-X', et de préférences évidées. Leurs sommets sont plaqués l'un contre l'autre, ou au besoin de part et d'autre d'une âme de renfort. Dans la partie plate ainsi formée de l'élément d'accrochage 9, une pluralité de trous 10 sont alignés sensiblement parallèlement à X-X'. Ils permettent le réglage longitudinal de l'accrochage du panneau P, qui détermine son angle d'attaque dans l'eau.

Le repère 11 désigne un déflecteur arrière qui, bien que non indispensable, est utile pour assurer un positionnement rapide du panneau P dans son angle de travail au moment du filage. Il s'agit d'un élément plan trapézoïdal, relié par ses cotés inférieur et supérieur à la plaque 1, de part et d'autre de X-X', et faisant avec X-X'un angle de 20°, environ, ouvert vers l'arrière. N'étant pas jointif par son côté avant avec la plaque 1, il autorise le passage d'une veine d'eau tout le long du pli central la de la plaque 1.

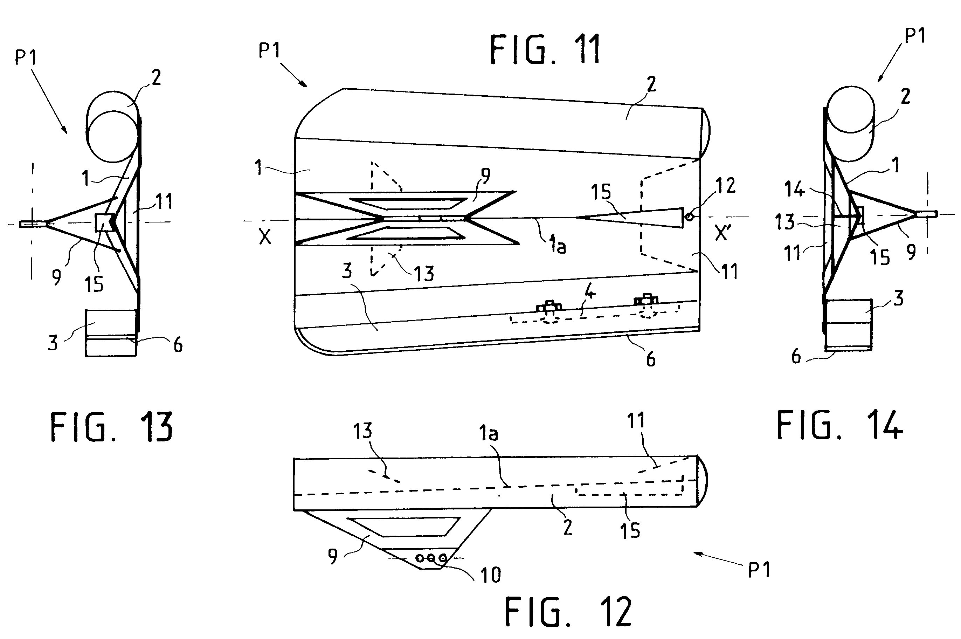

Les Figs. 11 à 14 représentent une autre forme de réalisation préférée de panneau selon l'invention, qui présente une capacité accrue à s'écarter du bateau lors du filage. Ce panneau P1 ne sera pas décrit dans le détail du fait qu'il a en commun avec le panneau P des Figs. 3 à 6 la plupart de ses éléments arrangés de la même façon : plaque 1 à profil en V évasé avec deux ailes, flotteur tubulaire 2, élément tubulaire 3 non étanche renfermant un lest 4, semelle 6, élément d'accrochage 9, déflecteur arrière 11.

Le panneau P1 comporte de plus un élément arrière 15 augmentant l'effet de pincement du flotteur 2 et de l'élément tubulaire 3. L'élément 15 fait saillie sur la face interne de la plaque 1. Il est axé sur X-X' et a la forme d'un coin dirigé vers l'avant. Il contribue à la stabilité du panneau dans son plan.

En fait, le panneau P1 diffère du plateau P par sa partie avant : la plaque 1 en forme de dièdre est prolongée jusqu'à l'avant, alors que la plaque 7 formant étrave a été supprimée. Par contre, un déflecteur avant 13 a été ajouté, le long de la face externe de la plaque 1 comme le déflecteur arrière 11, mais incliné dans le sens opposé, à savoir qu'il forme avec X-X' un angle aigui ouvert vers l'avant. Le déflecteur avant 13 consiste lui aussi en un élément plan trapézoïdal relié par ses côtés inférieur et supérieur à la plaque 1, de part et d'autre de X-X'. Il définit avec la plaque 1 un passage d'eau qui se rétrécit vers l'arrière. A la Fig. 14, l'élément portant le repère 14 est une paroi médiane de renforcement.

Lorsque le panneau P1 est mis à l'eau, il s'écarte immédiatement par l'action de l'eau sur le déflecteur 13, alors qu'en l'absence de celui-ci, il peut avoir tendance à rester le long du bateau. A noter que le déflecteur 13, tout en restant bien entendu sur l'avant par rapport aux points de fixation 10 de l'élément 9, doit être positionné assez nettement en deçà du bord avant de la plaque 1, pour qu'il soit inopérant lorsque le panneau P1 travaille.

Une des caractéristiques d'un panneau selon l'invention étant d'avoir une flottabilité voisine de zéro, une certaine liberté existe quant au choix du ou des matériaux pour le réaliser, allant de l'acier utilisé classiquement à des matériaux composites beaucoup plus légers. On donnera de préférence au panneau une flottabilité légèrement positive pour la raison pratique déjà invoquée. A noter par ailleurs qu'en cas de décrochage, le panneau pourra ainsi être récupéré.

En plus d'assurer en statique dans l'eau la verticalité du panneau P ou P1, ou tout au moins d'y contribuer, le lest 4, par réglage de sa position longitudinale, permet de déterminer une inclinaison de l'axe X-X' par rapport à l'horizontale, positive quand le lest se trouve vers l'arrière (axe X-X' montant vers l'avant), ou négative quand le lest est en avant. L'inclinaison est choisie selon l'usage que l'on fait du panneau, comme on le verra plus loin, mais également de manière à optimiser son comportement fonctionnel. Pour une application donnée, le réglage peut être fait en bassin, une fois pour toutes.

La Fig. 2 montre des panneaux P selon l'invention gréés sur un train de pêche pour le chalutage de fond, comparés à des panneaux classiques P' sur un même train de pêche à la Fig. 1. Ces panneaux P' sont accrochés du côté de leur face intérieure et sur l'avant aux funes F déroulées à partir du navire N, et sur l'arrière de leur face extérieure, en deux point haut et bas, aux bras B rejoignant les ailes du chalut C. C'est sous l'action de ce gréement à trois points d'accrochage que les panneaux P' se positionnent verticalement et dans leur angle de travail, une fois seulement que le train de pêche est sur le fond. Avant, le positionnement des panneaux P' est plus ou moins anarchique, d'ou des risques d'emmêlement au filage.

Au lieu de cela, les panneaux P selon l'invention sont accrochés en un seul point - l'un des trous 10 de l'élément d'accrochage 9 - à l'extrémité d'un câble de traction D dont l'autre extrémité est attachée au train de pêche, au point de rencontre R des bras B et des funes F, ou à proximité de celui-ci. En ce point est également fixé un lest L le maintenant au fond, à l'encontre de la force ascensionnelle des panneaux P. Le lest ici représenté est un segment de chaîne S constituant une partie des bras B, mais qui, en variante, est traînant, son extrémité arrière étant libre. Il est également possible d'accrocher les panneaux P, par l'intermédiaire de leur câble de traction D, sur les funes en avant des lests L. Ce mode de gréement présente l'avantage que lors du filage ou de la remontée du chalut, les panneaux et les lests partent du bateau ou y arrivent nettement séparés les uns des autres, ce qui rend le travail des marins plus facile.

Dans cette application, les panneaux P ont leur lest 4 réglé de telle manière qu'au repos dans l'eau, leur axe X-X' soit légèrement montant, incliné de 2 à 5° environ par rapport à l'horizontale. Ainsi, lors du chalutage, ils évoluent sur une trajectoire d'équilibre à une certaine hauteur au-dessus du fond, fonction principalement de la longueur des câbles de traction D.

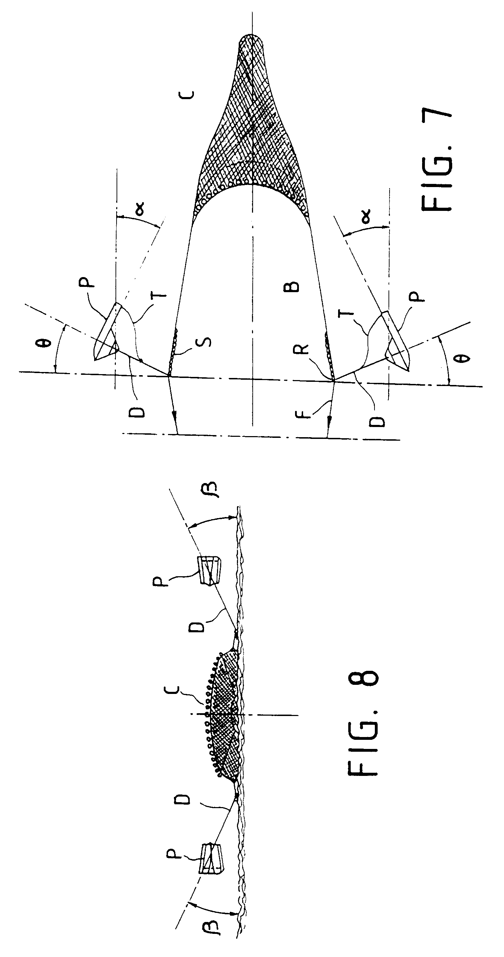

Les Figs. 7 et 8 illustrent des angles, soit l'angle de travail α des panneaux P, d'une part ; et les angles β et θ que fond respectivement les câbles D avec le fond, et avec le plan transversal (angle de traînée) pour une vitesse de chalutage désirée. Les valeurs suivantes de ces angles sont données à titre non limitatif, du fait d'avoir été testées et de s'être avérées satisfaisantes :
α compris entre 25 et 28°, environ ;
β voisin de 20° ;
θ voisin de 25°.

Pour un modèle de panneau P donné, les valeurs de β et θ sont avant tout fonction de la longueur du câble D, la vitesse de chalutage n'ayant en fait que peu d'influence sur elles. Bien entendu, toutes ces indications, ainsi que celles qui suivent, valent également pour les panneaux P1 qui sont directement interchangeables avec les panneaux P.

A la Fig. 7, apparaît en outre un bout lâche T réunissant un point d'accrochage arrière 12 des panneaux P situé sur X-X', soit sur le pli médian 1a de la plaque 1, Fig. 3, à un point de leur câble D écarté de l'élément 9. Le rôle du bout T est double. Tout d'abord, il agit comme limitateur de l'angle que font les panneaux P avec leur câble D, de manière à ce que les panneaux P se placent dès le début du filage selon un angle voisin de leur angle de travail et soient ainsi immédiatement opérationnels en tant qu'écarteurs. De plus, par sa traînée, le bout T parfait la stabilité transversale des panneaux P, lors du chalutage.

L'examen des Fig. 7 et 8 impose en outre une remarque qui a son importance : on sait que les panneaux divergents de chalut ont un effet non négligeable sur la pêche en elle-même, en ce sens qu'ils rabattent le poisson vers le centre, donc vers l'ouverture du chalut. Or, tels qu'ils sont gréés, les panneaux P sont beaucoup plus distants l'un de l'autre que des panneaux classiques tels que les panneaux P' à la Fig. 1. Il y a alors tout lieu d'en déduire que l'effet pêchant des panneaux P sera nettement supérieur.

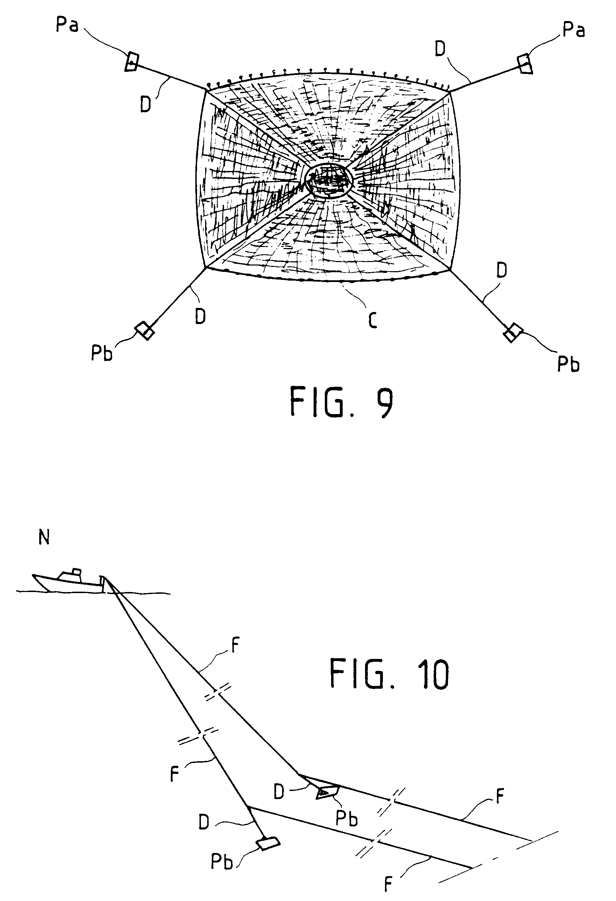

Comme on l'a vu précédemment, au repos, l'inclinaison dans l'eau de l'axe médian X-X' des panneaux P dépend du positionnement longitudinal du lest 4. Si l'inclinaison est positive, les panneaux P, indépendamment de leur flottabilité, auront tendance à monter lorsqu'ils avanceront dans l'eau. Ils auront donc en plus de leur effet écarteur un effet ascensionnel qui pourra être mis a profit pour l'ouverture d'un chalut pélagique, conjugué à l'effet plongeur de deux autres panneaux P réglés de façon inverse, c'est-à-dire avec une inclinaison de X-X' négative. Cette application est illustrée à la Fig. 9 où deux panneaux écarteurs et ascensionnels Pa sont fixés par l'intermédiaire de leur câble de traction D aux ailes supérieures du chalut C, tandis que deux panneaux écarteurs et plongeurs Pb sont fixés aux ailes inférieures. Pour augmenter l'effet plongeur des panneaux Pb, il pourra être utile de prévoir sue ceux-ci un élément d'accrochage 9 décalé vers le bas par rapport au plan de symétrie passant par X-X'.

A la Fig. 10, des panneaux selon l'invention sont montrés schématiquement dans une autre application où ils impriment une double inclinaison aux funes F du train de pêche. Ce sont des panneaux plongeurs Pb, sur lesquels les éléments d'accrochage 9 sont de préférence décalés vers le bas comme stipulé au paragraphe précédent, et qui sont reliés par l'intermédiaire de câbles de traction D en un point des funes F éloigné du chalut C. Lors de l'avancement, ce point est donc entraîné vers le bas par les panneaux plongeurs Pb, de sorte que les funes F présentent une double inclinaison, forte entre le navire N et ledit point, et nettement moindre de ce dernier jusqu'à l'engin de pêche. Pour travailler dans les grands fonds, cet artifice permet de diminuer sensiblement la longueur des funes.

## Revendications

1. Panneau divergent pour assurer l'écartement des ailes d'un chalut, lequel panneau est de forme générale rectangulaire et a son côté supérieur pourvu d'un flotteur (2) afin qu'en statique il se positionne verticalement dans l'eau, caractérisé en ce qu'il comporte sur l'avant de sa face intérieure un élément en saillie (9) avec un câble de traction (D) qui constitue son unique liaison avec le train de pêche, en ce qu'il a une flottabilité nulle ou voisine de zéro, en ce qu'il définit dans la direction de son axe médian longitudinal (X-X'), au moins le long d'une de ses faces, sur la longueur du flotteur (2), un passage d'eau pincé vers l'arrière, et en ce qu'il comporte des moyens permettant de régler l'inclinaison de son axe médian (X-X') au repos dans l'eau.

2. Panneau selon la revendication 1, caractérisé en ce qu'il a une flottabilité positive.

3. Panneau selon la revendication 1 ou 2, caractérisé en ce que sur le côté opposé au flotteur (2), il comporte un lest (4) réglable en position longitudinale.

4. Panneau selon la revendication 3, caractérisé en ce que son corps est constitué pour l'essentiel d'une plaque (1) sur les côtés supérieur et inférieur de laquelle se trouvent respectivement le flotteur (2) qui est de forme tubulaire, et un élément également tubulaire (3) porteur du lest (4), placés symétriquement de part et d'autre de l'axe médian (X-X'), et orientés de manière à définir entre eux ledit passage d'eau pincé vers l'arrière.

5. Panneau selon la revendication 4, caractérisé en ce que la plaque (1) comporte un pli médian (1a) et deux plis inférieur (1b) et supérieur (1c), de sorte que son profil vertical a la forme d'un V évasé dont les branches sont prolongées par des ailes, le V étant ouvert vers l'extérieur.

6. Panneau selon la revendication 5, caractérisé en ce que la plaque (1) se prolonge jusqu'à l'avant, et en ce qu'il comporte un déflecteur avant (13), lequel est une plaque soudée par ses côtés inférieur et supérieur de part et d'autre de l'axe (X-X') sur la face extérieure de la plaque (1), et faisant avec cet axe un angle aigu ouvert vers l'avant.

7. Panneau selon la revendication 5, caractérisé en ce que le flotteur (2) et l'élément tubulaire (3) se prolongent au-delà de l'avant de la plaque (1) et ont leurs extrémités avant découpées en arrondi vers l'extérieur, réunies par une plaque galbée (7).

8. Panneau selon la revendication 7, caractérisé en ce que la plaque galbée 7 présente une fente verticale (8) non loin de son bord avant.

9. Panneau selon l'une des revendications 5 à 7, caractérisé en ce qu'il comporte en outre un déflecteur arrière (11), lequel est une plaque trapézoïdale soudée par ses côtés inférieur et supérieur de part et d'autre de l'axe (X-X') sur la face extérieure de la plaque (1).

10. Panneau selon l'une des revendications 4 à 9, caractérisé en ce que le dessous de l'élément tubulaire (3) est pourvu d'une semelle (6).

11. Panneau selon l'une des revendications 4 à 9, caractérisé en ce qu'il comporte en outre, dans sa partie arrière, un élément médian 15 faisant saillie sur la face interne de la plaque (1) pour augmenter l'effet de pincement du flotteur (2) et de l'élément tubulaire (3).

12. Panneau selon l'une des revendications 1 à 11, caractérisé en ce que son élément d'accrochage (9) comporte plusieurs trous (10) alignés sensiblement parallèlement à (X-X') afin de permettre un réglage longitudinal de l'accrochage du panneau à son câble de traction (D).

13. Panneau selon l'une des revendications 1 à 12, caractérisé en ce qu'il comporte en outre à l'arrière, sur l'axe médian (X-X') un point d'accrochage (12) pour l'extrémité d'un bout (T) dont l'autre extrémité se fixe en un point du câble de traction (D), le bout (T) agissant en tant que limitateur de l'angle entre le panneau et le câble de traction (D), et en tant que stabilisateur transversal de l'arrière du panneau.

14. Panneau selon l'une des revendications 1 à 13, caractérisé en ce qu'il est équilibré de manière à ce que son axe (X-X') ait une inclinaison légèrement positive par rapport à l'horizontale quand il est dans l'eau au repos.

15. Panneau selon l'une des revendications 1 à 13, caractérisé en ce qu'il est équilibré de manière à ce que son axe (X-X') ait une inclinaison négative quand il est au repos dans l'eau, pour une utilisation en tant que panneau plongeur écarteur (Pb).

16. Panneau selon la revendication 15, caractérisé en ce que l'élément d'accrochage (9) est déporté vers le bas par rapport au plan de symétrie passant par (X-X').

17. Panneau selon la revendication 15 ou 16, caractérisé en ce qu'il est relié en un point d'une fune (F) distant de l'engin de pêche pour imprimer à celle-ci une double inclinaison.

## Claims

1. Divergent otter board for spacing the wings of a trawl net, this board being generally rectangular in shape and being provided with a float (2) on its upper end so that it assumes an upright position in the water when stationary, characterised in that it has on the front of its internal face a projecting member (9) with a traction cable (D) which is its only link with the fishing rig, it has a buoyancy of zero or close to zero, it defines in the direction of its longitudinal median axis (X-X') along at least one of its faces alongside the length of the float (2) a passage for water which narrows towards the rear and it has means allowing the inclination of its median axis (X-X') to be adjusted when stationary in the water.

2. A board as claimed in claim 1, characterised in that it has a positive buoyancy.

3. A board as claimed in claim 1 or 2, characterised in that on the end opposite the float (2), it has a ballast weight (4), the longitudinal position of which can be adjusted.

4. A board as claimed in claim 3, characterised in that its body essentially consists of a plate (1) on the upper and lower ends of which are disposed respectively the float (2), which is tubular in shape, and another element which is also tubular (3) bearing the ballast weight (4) disposed symmetrically on either side of the median axis (X-X') and oriented so as to define between them the said passage for water narrowing towards the rear.

5. A board as claimed in claim 4, characterised in that this plate (1) has a median fold (1a) and two lower (1b) and upper (1c) folds such that its vertical profile is in the shape of a flared V, the branches of which are extended by wings, this V opening towards the exterior.

6. A board as claimed in claim 5, characterised in that the plate (1) extends to the front and has a front deflector (13) which is a plate welded to the external face of the plate (1) by its lower and upper ends on either side of the axis (X-X') and forming an acute angle with this axis opening towards the front.

7. A board as claimed in claim 5, characterised in that the float (2) and the tubular element (3) extend beyond the front of the plate (1) and the ends thereof are cut to a rounded shape towards the exterior joined by a curved plate (7).

8. A board as claimed in claim 7, characterised in that the curved plate 7 has a vertical slit (8) not far from its front edge.

9. A board as claimed in one of claims 5 to 7, characterised in that it also has a rear deflector (11), which is a trapezoidal plate welded to the external face of the plate (1) by its lower and upper ends on either side of the axis (X-X').

10. A board as claimed in one of claims 4 to 9, characterised in that the underside portion of the tubular element (3) is provided with a sole plate (6).

11. A board as claimed in one of claims 4 to 9, characterised in that it also has at its rear part a median element 15 projecting on the internal face of the plate (1) to increase the streamlining effect of the float (2) and the tubular element (3).

12. A board as claimed in one of claims 1 to 11, characterised in that the hooking member (9) thereof has several orifices (10) aligned essentially parallel with (X-X') so that the longitudinal position at which the board is hooked to its traction cable (D) can be adjusted.

13. A board as claimed in one of claims 1 to 12, characterised in that it also has at the rear, on the median axis (X-X'), a hooking point (12) for the end of a loose end (T) the other end of which is secured to a point of the traction cable (D), the end (T) serving to limit the angle between the board and the traction cable (D) and stabilise the rear of the board transversely.

14. A board as claimed in one of claims 1 to 13, characterised in that it is so balanced that its axis (X-X') has a slightly positive inclination relative to the horizontal when it is stationary in the water.

15. A board as claimed in one of claims 1 to 13, characterised in that it is so balanced that its axis (X-X') has a negative inclination when it is stationary in the water so that it can be used as a sinking spacer board (Pb).

16. A board as claimed in claim 15, characterised in that the hooking member (9) is offset downwards relative to the plane of symmetry passing through (X-X').

17. A board as claimed in claim 15 or 16, characterised in that it is joined at a point of a trawl warp (F) remote from the fishing equipment so that it imparts a two-stage inclination thereto.

## Patentansprüche

1. Scherbrett zum Auseinanderhalten der Flügel eines Schleppnetzes, wobei das Scherbrett eine weitgehend rechteckige Form aufweist und einen Schwimmkörper (2) auf der Oberseite besitzt, um in Ruhestellung senkrecht im Wasser ausgerichtet zu sein,
dadurch gekennzeichnet, daß es vorn auf der Innenseite einen Vorsprung (9) mit einer Zugleine (D) besitzt, welche die einzige Verbindung mit dem Schleppnetz bildet, daß sein Auftrieb nahezu oder gleich Null ist, daß es in Richtung seiner Längsachse (X-X') mindestens auf einem de beiden Flügel über die Länge eines Schwimmkörpers (2) hin einen sich nach hinten verengenden Wasserdurchlaß bildet und es Mittel zum Einstellen der Neigung der Längsachse (X-X') wenn es sich in Ruhestellung im Wasser befindet.

2. Scherbrett nach Patentanspruch 1, dadurch gekennzeichnet, daß sein Auftrieb einen positiven Wert besitzt.

3. Scherbrett nach Patentanspruch 1 oder 2, dadurch gekennzeichnet, daß es auf der dem Schwimmkörper (2) gegenüberliegenden Seite einen in Längsrichtung verstellbaren Ballast (4) besitzt.

4. Scherbrett nach Patentanspruch 3, dadurch gekennzeichnet, daß sein Körper überwiegend aus einer Platte (1) besteht, auf deren Oberseite der röhrenförmige Schwimmkörper (2) und auf deren Unterseite ein ebenfalls röhrenförmiges Bauteil (3) als Ballasthalter (4) symmetrisch beidseits der Längsachse (X-X') befestigt und derart angeordnet sind, daß sie einen sich nach hinten verengenden Wasserdurchlaß bilden.

5. Scherbrett nach Patentanspruch 4, dadurch gekennzeichnet, daß die Platte (1) einen mittleren Falz (1a) sowie je einen unteren Falz (1b) und einen oberen Falz 1c) aufweist, sodaß sie senkrecht gesehen ein Profil in Form eines aufgeweiteten "V" besitzt, dessen Schenkel durch Flügel verlängert werden, wobei das V-förmige Profil nach außen geöffnet ist.

6. Scherbrett nach Patentanspruch 5, dadurch gekennzeichnet, daß die Platte (1) bis nach vorn reicht und eine vordere Unlenkplatte (13) in Form einer auf der Ober- und Unterseite links und rechts der Längsachse (X-X') an der Außenseite der Platte (1) angeschweißten Metallplatte besitzt, die mit dieser Längsachse einen nach vorn geöffneten spitzen Winkel bildet.

7. Scherbrett nach Patentanspruch 6, dadurch gekennzeichnet, daß der Schwimmkörper (2) und das röhrenförmige Bauteil (3) über die Vorderkante der Platte (1) hinausreichen und ihre Vorderenden nach außen abgerundet und mit einer gewölbten Platte (7) verbunden sind.

8. Scherbrett nach Patentanspruch 7, dadurch gekennzeichnet, daß die gewölbte Platte (7) nicht weit hinter ihrer Vorderkante einen senkrechten Spalt (8) aufweist.

9. Scherbrett nach einem der Patentansprüche 5 bis 7, dadurch gekennzeichnet, daß sie auch eine hintere Umlenkplatte (11) in Form einer auf der Ober- und Unterseite links und rechts der Längsachse (X-X') an der Außenseite der Platte (1) angeschweißten trapezförmigen Metallplatte besitzt.

10. Scherbrett nach einem der Patentansprüche 4 bis 9, dadurch gekennzeichnet, daß das röhrenförmige Bauteil (3) mit einer Sohle (6) versehen ist.

11. Scherbrett nach einem der Patentansprüche 4 bis 9, dadurch gekennzeichnet, daß es weiterhin auf der Hinterseite ein Mittelstück (15) besitzt, das auf der Innenseite der Platte (1) hervorragt, um den Verengungseffekt des Schwimmkörpers (2) und des röhrenförmigen Bauteils (3) zu verstärken.

12. Scherbrett nach einem der Patentansprüche 1 bis 11, dadurch gekennzeichnet, daß seine Anhängvorrichtung (9) mehrere weitgehend parallel zur Längsachse (X-X') angeordnete Löcher (10) aufweist, um die Befestigung des Scherbrettes an der Zugleine (D) in Längsrichtung verstellen zu können.

13. Scherbrett nach einem der Patentansprüche 1 bis 12, dadurch gekennzeichnet, daß es weiterhin hinten auf der Längsachse (X-X') einen Befestigungspunkt (12) für das Ende eines Kabels (T) besitzt, dessen anderes Ende an einem Punkt der Zugleine (D) befestigt ist, wobei das Kabel (T) zur Begrenzung des Winkels zwischen der Scherbrett und der Zugleine (D) und zur Stabilisierung der Hinterseite des Scherbrettes in Querrichtung dient.

14. Scherbrett nach einem der Patentansprüche 1 bis 13, dadurch gekennzeichnet, daß es so ausgewuchtet ist, daß seine Längsachse (X-X') eine leicht positive Neigung gegenüber der Waagrechten aufweist, wenn es sich in Ruhestellung im Wasser befindet.

15. Scherbrett nach einem der Patentansprüche 1 bis 13, dadurch gekennzeichnet, daß es so ausgewuchtet ist, daß seine Längsachse (X-X') eine negative Neigung gegenüber der Waagrechten aufweist, wenn es sich in Ruhestellung im Wasser befindet, um gleichzeitig als Scher- und Tauchbrett (Pb) zu dienen.

16. Scherbrett nach Patentanspruch 15, dadurch gekennzeichnet, daß die Zugseilbefestigung (9) in Bezug auf die durch (X-X') verlaufende Symmetrieebene nach unten versetzt angebracht ist.

17. Scherbrett nach Patentanspruch 15 oder 16, dadurch gekennzeichnet, daß es an einem Punkt mit einer weiter vom Schleppboot entfernten Zugleine (F) verbunden ist, um dieser eine doppelte Neigung zu verleihen.
